# EUROPÄISCHE PATENTANMELDUNG

(11) **EP 4 711 062 A1**
(43) Veröffentlichungstag der Anmeldung: **18.03.2026**
(21) Anmeldenummer: 24200331.7
(22) Anmeldetag: 13.09.2024
(51) Int. Cl.: B22F 12/90, B22F 10/25, B22F 10/28, B22F 10/85, B33Y 10/00, B33Y 30/00, B33Y 50/02, B23K 9/04, B23K 26/342, G01N 27/90, B22F 10/14

(54) **VERFAHREN ZUM PRÜFEN EINES BAUTEILS, WELCHES MITTELS EINES ADDITIVEN SCHMELZVERFAHRENS HERGESTELLT WIRD, UND MESSEINRICHTUNG ZUM PRÜFEN DES BAUTEILS**

(71) Anmelder: Siemens Aktiengesellschaft, 80333 München (DE)
(72) Erfinder: Heinrichsdorff, Frank, 14513 Teltow (DE); Kastsian, Darya, 14612 Falkensee (DE); Reznik, Daniel, 13503 Berlin (DE)
(74) Vertreter: Siemens Patent Attorneys

(57) **Zusammenfassung**

Verfahren zum Prüfen eines Bauteils (12), welches mittels einem additiven Schmelzverfahren hergestellt wird, mit einer Wirbelstrommesseinheit (14), wobei eine Bauteileigenschaft in Abhängigkeit von einer bestimmten Temperatur erfolgt. Ferner betrifft die Erfindung eine Messeinrichtung (10).

## Beschreibung

Die Erfindung betrifft ein Verfahren zum Prüfen eines insbesondere metallischen oder zumindest leitfähigen Bauteils, welches mittels eines additiven Schmelzverfahrens schichtweise in einem Fertigungsprozess aus einem Material hergestellt wird, gemäß dem Patentanspruch 1. Ferner betrifft die Erfindung eine Messeinrichtung zum Prüfen eines Bauteils, welches mittels eines additiven Schmelzverfahrens schichtweise aus einem Material hergestellt wird, gemäß dem Patentanspruch 9.

Es wäre wünschenswert, während eines additiven Fertigungsprozesses, speziell während des Prozesses des Laserstrahlschweißens im Pulverbett, der gemeinhin als Selektives Laserschmelzen (Selective Laser Melting (SLM) oder Laser Powder Bed Fusion (L-PBF)) bezeichnet wird, die Qualität des dabei frisch verfestigten Materials, insbesondere kontinuierlich, zu überwachen, um noch während des Fertigungsprozesses entweder mittels eines Eingriffs in die Prozessführung oder mittels eines Prozessabbruchs eingreifen zu können.

Spurek, M. A., Spierings, A. B., Lany, M., Revaz, B., Santi, G., Wicht, J., & Wegener, K. (2022), "In-situ monitoring of powder bed fusion of metals using eddy current testing", Additive Manufacturing, 60, 103259 zeigt ein Monitoring der Qualität eines Material.

Aufgabe der vorliegenden Erfindung ist es, ein Verfahren sowie eine Messeinrichtung bereitzustellen, durch welche bei einem additiven Schmelzverfahren vorteilhaft, insbesondere in-line beziehungsweise in-situ, das mittels des Schmelzverfahrens herzustellende Bauteil zu prüfen, um eine unmittelbare Bauteileigenschaft, insbesondere eine Porosität des Bauteils vorteilhaft ermitteln zu können.

Diese Aufgabe wird erfindungsgemäß durch die Gegenstände der unabhängigen Patentansprüche gelöst. Vorteilhafte Ausgestaltungen und Weiterbildungen sind Gegenstand der abhängigen Ansprüche, der Beschreibung sowie der Figuren.

Ein erster Aspekt der Erfindung betrifft ein Verfahren zum Prüfen eines Bauteils, welches mittels eines additiven Schmelzverfahrens schichtweise, das heißt durch Schichten, insbesondere in einem Fertigungsprozess, aus einem Material, insbesondere einem Metall, hergestellt wird. Bei dem erfindungsgemäßen Verfahren wird während des Fertigungsprozesses wenigstens ein zuletzt gebildeter Bereich der jeweils aktuellen Schicht mittels einer Wirbelstrommesseinheit einer Messeinrichtung eine Leitfähigkeit, insbesondere über Wirbelstromverluste, erfasst und daraus ein Leitfähigkeitswert bestimmt wird, anhand dessen eine Bauteileigenschaft, insbesondere die Porosität, des Materials in dem wenigstens einen Bereich abgeleitet wird.

Um nun die Bauteileigenschaft besonders vorteilhaft bestimmen zu können, wird eine Temperatur des wenigstens einen Bereichs bestimmt, insbesondere mittels Messung und/oder Simulation beziehungsweise Berechnung, und die Ableitung der Bauteileigenschaft erfolgt in Abhängigkeit von der bestimmten Temperatur.

Mit anderen Worten wird mittels einer Wirbelstrommessung durch eine Wirbelstrommesseinheit, welche insbesondere während des Bildens der Schichten durch Schmelzen an dem Schmelzapparat mitgeführt werden kann, durch Wirbelstromverluste in dem geschmolzenen Material dessen Leitfähigkeit bestimmt. So wird die Messung der Leitfähigkeit beziehungsweise eine Wirbelstrommessung kombiniert mit der Bestimmung der Temperatur des Werkstücks beziehungsweise des Bauteils, sodass als der Leitfähigkeitswert beziehungsweise die spezifische Leitfähigkeit die temperaturabhängige spezifische Leitfähigkeit als Referenzwert verwendet wird.

Dabei liegt der Erfindung die Erkenntnis zugrunde, dass eine kontinuierliche Bestrahlung, beispielsweise mittels Lasers des aufzubauenden Werkstücks beziehungsweise Bauteils, in einem Pulverbettprozess beziehungsweise L-PBF-Prozess zu einer Temperaturerhöhung der Werkstücktemperatur führt, die in bestimmten Fällen beispielsweise mehrere 100°C betragen kann. Ebenso ist bekannt, dass sich die elektrische Leitfähigkeit fast aller technisch relevanten Metalllegierungen mit der Temperatur stark ändert. So ergibt sich folgendes Problem, falls nur Wirbelströme des additiven Fertigungsprozesses bestimmt werden:
In einem L-PBF-Prozess wird typischerweise ein nahezu porenfreies Material mit einer Porosität kleiner 1% als "gute Qualität" betrachtet. Im Bereich kleiner Porositäten entspricht das etwa einer elektrischen Leitfähigkeit, die einen Wert von 99% des Erwartungswert haben sollte.

Ferner ist bekannt, dass beispielsweise für rostfreien Stahl AISI 316 ein spezifischer Widerstand von 77,7 µΩ • cm bei 300 K und 82,5 µΩ • cm bei 400 K bestimmt wurde. Daraus folgt, dass eine Temperaturverschiebung von 100 K eine Verschiebung des spezifischen Widerstands (und damit auch der spezifischen Leitfähigkeit) um 9,6 % bedeutet.

Daraus folgt, dass ohne genaue Kenntnis der Werkstücktemperatur ein Monitoringsystem eine Abnahme in der Leitfähigkeit durch eventuell vorhandene Poren nicht erkennen kann, da diese in der Regel klein ist, wenn gleichzeitig eine wesentlich größere Abnahme der Leitfähigkeit durch eine Temperaturerhöhung vorliegt.

Durch das hier vorgestellte Verfahren können diese oben genannten Probleme gelöst werden, da als die Leitfähigkeit beziehungsweise der Leitfähigkeitswert die temperaturabhängige spezifische Leitfähigkeit verwendet wird, da die Temperatur des Werkstücks beziehungsweise des Bauteils bekannt ist, beziehungsweise mittels des Verfahrens bestimmt wird. Diese Temperaturbestimmung kann auf zweierlei Weise erfolgen:
Erstens erfolgt eine direkte Temperaturmessung, indem beispielsweise vor oder hinter der Wirbelstromerregungsspule beziehungsweise dem Wirbelstrommessgerät, das über das zu messende Werkstück oder über dem Probenkörper während der Beschichtungsfahrt verfährt, ein berührungslos messender Temperatursensor montiert wird. Dieser liefert unmittelbar vor beziehungsweise nach jeder Wirbelstrommessung einen Messwert für die Oberflächentemperatur des Werkstücks oder des Probenkörpers, sodass die gemessene spezifische Leitfähigkeit einem temperaturabhängigen Referenzwert gegenübergestellt werden kann. So können beispielsweise Tabellenwerte aus geeigneten Tabellen für metallische Werkstoffe für eine jeweilige Legierung entnommen werden.

Zweitens kann die Temperatur mittels eines geeigneten Modells berechnet beziehungsweise bestimmt werden. So kann insbesondere anstatt der Temperaturmessung oder zusätzlich zu dieser beispielsweise zur Kontrolle eine Bestimmung der Temperatur auch mittels einer numerischen Berechnung geschehen. Es wird insbesondere ein dreidimensionales numerisches Berechnungsmodell (bevorzugt ein Modell nach der Finite-Elemente-Methode) aufgestellt beziehungsweise verwendet.

Somit ergibt sich durch das erfindungsgemäße Verfahren der Vorteil, dass auch kleinste Veränderungen der Bauteilqualität, insbesondere das Auftreten von Porositäten, mittels einer Wirbelstrommessung in-situ beziehungsweise in-line bei der additiven Herstellung des Werkstücks beziehungsweise des Bauteils bestimmt werden können.

In vorteilhafter Ausgestaltung der Erfindung wird die Wirbelstrommesseinheit mit einer Montageeinheit mitgeführt. Mit anderen Worten ist die Wirbelstrommesseinheit so mit einer Belichtungseinheit, beispielsweise einem Laser, aber auch mit einer Beschichtungseinheit, welche beispielsweise bei einem Pulverbettverfahren das Pulver nach dem Belichten aufträgt, verbunden, sodass dieses quasi jeweils in den aktuell bearbeiteten Bereich mitgeführt werden kann, um dort Wirbelströme beziehungsweise Wirbelstromverluste zu bestimmen. Es ergibt sich zum einen der Vorteil, dass die Messeinrichtung, welche die Wirbelstrommesseinheit aufweist, besonders kompakt ausgebildet werden kann, da beispielsweise das Gehäuse gemeinsam mit der Montageeinheit ausgebildet werden kann. Zusätzlich ergibt sich der Vorteil, insbesondere wenn die Montageeinheit die Belichtungseinheit ist, dass die Wirbelstrommesseinheit besonders präzise und/oder zeitnah an den jeweils zu messenden aktuell gebildeten Bereich herangeführt werden kann.

In weiterer vorteilhafter Ausgestaltung der Erfindung wird als die Bauteileigenschaft eine Porosität und/oder Fehlstellen ermittelt. Mit anderen Worten wird mittels der Wirbelstrommessung in Kombination mit der daraus bestimmten temperaturabhängigen spezifischen Leitfähigkeit und der Temperatur, welche für den Bereich des Bauteils beziehungsweise Werkstücks ermittelt wird, beispielsweise anhand eines geeigneten Modells, durch Wirbelstromverluste auf Porosität und/oder anderen Fehlstellen, wie beispielsweise Risse oder dergleichen, geschlossen. Dadurch ergibt sich der Vorteil, dass das Verfahren besonders vorteilhaft zum Prüfen des mittels additiven Schmelzverfahren hergestellten Bauteils verwendet werden kann.

In weiterer vorteilhafter Ausgestaltung der Erfindung erfolgt das Erfassen der Temperatur des Bereichs beziehungsweise Messstelle mittels einer Sensoreinheit, insbesondere kontaktlos, beispielsweise mittels eines Pyrometers. Zusätzlich oder alternativ wird die Temperatur anhand eine Modells des Bauteils und/oder des Fertigungsprozesses, welcher beispielsweise Eigenschaften des Lasers und/oder des Bauraums beziehungsweise eines Baubereichs umfasst, ermittelt beziehungsweise berechnet. Mit anderen Worten wird ein geeigneter Sensor, wie beispielsweise ein Pyrometer, verwendet, um die Temperatur berührungslos in dem Bereich zu messen. Zusätzlich oder alternativ kann beispielsweise mittels der Finite-Elemente-Methode mittels eines Modells die Bauteiltemperatur während des Fertigungsprozesses insbesondere für den jeweiligen Bereich bestimmt werden. Vorteilhafterweise können beide Varianten sowohl das Messen als auch das Berechnen verwendet werden, da es sich beispielsweise ergibt, dass für eine Pyrometermessung ein Graustrahler zugrunde gelegt wird, was jedoch der Realität während des Schmelzprozesses nicht entspricht, sodass beispielsweise mittels der Modellrechnung gegengecheckt werden kann. Hierdurch ergibt sich der Vorteil, dass aufgrund der flexiblen Temperaturbestimmung das Verfahren besonders vorteilhaft beispielsweise auch für beliebige Bauteilgeometrien und/oder Materialien verwendet werden kann.

In vorteilhafter Ausgestaltung der Erfindung wird das Modell mittels einer quasi-statistischen Berechnung bestimmt. Mit anderen Worten erfolgt eine numerische Näherungsmethode, bei der insbesondere vereinfacht davon ausgegangen wird, dass es für eine Temperaturberechnung zulässig ist, die von einer Metalloberfläche absorbierte Laserstrahlung homogen auf die bestrahlte Fläche zu verteilen. Dabei kann eine Korrektur für die Laserauszeiten (Zeiten für Sprünge zwischen Positionen und/oder für die Beschichtung) erfolgen. So werden thermische Verhalten unterschiedlicher Stadien des Baus (entspricht unterschiedlichen Bauhöhen) unter der Berücksichtigung eines homogenen Wärmeeintrags von oben sowie dem Abströmen von Wärme durch Leitung (in die Bauplatte und/oder in ein schlecht leitendes Pulverbett) sowie durch die Konvektion und Strahlung in der Baukammer berücksichtigt. Dadurch ergibt sich der Vorteil, dass ein besonders einfach mittels einer elektronischen Recheneinrichtung zur berechnendes Modells bereitgestellt werden kann, welches beispielsweise direkt auf einer Steuerungseinrichtung berechnet werden kann.

In einer weiteren vorteilhaften Ausgestaltung der Erfindung wird das Modell mittels einer homogenisierten dynamischen Berechnung bestimmt. Mit anderen Worten erfolgt, insbesondere, beispielsweise aufbauend auf der quasi-statistischen Berechnung, eine berechnungsbasierte Temperaturkompensation, welche einen etwas höheren Rechenaufwand benötigt, dafür aber unter Umständen eine besonders präzise Genauigkeit liefert. So kann beispielsweise von einer Startlösung (beispielsweise quasi-statistischen Berechnung) ausgehend, eine Modellierung des Aufbaus einer Schicht in einem Pulverbettprozess in mindestens zwei, bevorzugt mehrere Phasen unterteilt werden. Dabei ist eine Unterteilung in zwei Phasen sinnvoll, wenn beispielsweise eine Komponente beziehungsweise ein Bauteil im Prozess aufgebaut wird. Dabei kann die eine Phase als die Zeit für die Belichtung und die andere Phase als die Zeit für die Beschichtung dieser Komponenten bestimmt werden. Ferner kann die Laserleistungsumsprungzeit, nicht jedoch Belichtungszeit, korrigiert werden und in der ersten Phase als Quelle der Oberfläche der Komponente zugeordnet werden, wenn in der zweiten Phase (Beschichtung) der Laser ausgeschaltet ist und somit die Quelle auf null gesetzt wird. Dieses Vorgehen führt zu einem Ansteigen der Temperatur oberhalb der quasi-statistischen Berechnung, während die Temperatur einer Beschichtungszeit unter die quasistatistisch bestimmte Temperatur fällt, sodass insbesondere ein zeitlicher Verlauf der Temperaturänderung besonders vorteilhaft bestimmt werden kann. Dadurch ergibt sich der Vorteil, dass die Temperatur des Bauteils beziehungsweise des Werkstücks besonders präzise bestimmt werden kann.

Es ergibt sich in weiterer vorteilhafter Ausgestaltung für die homogenisierte dynamische Berechnung, dass wenigstens eine Phase und insbesondere genau eine Phase, bestimmt wird, die jeweils einen Teil des Bereichs und/oder einen Teil eines Schritts des Fertigungsprozess beschreiben beziehungsweise beschreibt. Mit anderen Worten haben Versuche gezeigt, dass der Unterschied zwischen der quasi-statistischen Berechnung und der homogenisierten dynamischen Berechnung bereits bei einer niedrigen Anzahl von Phasen für den zeitlichen Bereich der Wirbelstrommessung nach der Belichtung, eine besonders effektive Verbesserung im Vergleich zu der dafür benötigten Rechenleistung zeigt.

In weiterer vorteilhafter Ausgestaltung ist der Fertigungsprozess beziehungsweise das Schmelzverfahren ein selektives Laserschmelzen, ein selektives Elektronenstrahl-Schmelzen, ein Laserauftragsschweißen, ein Wire-Arc- beziehungsweise eine Plasma-Arc-Energy-Deposition, eine Wire-Feed-Electron-Deposition und/oder ein Metal-Binder-Jetting. Mit anderen Worten ist das Verfahren quasi für beliebige Schmelzverfahren geeignet, bei denen insbesondere ein metallischer Werkstück beziehungsweise ein metallisches Material durch Aufschmelzen zu einem Werkstück beziehungsweise Bauteil geformt wird. Dadurch ergibt sich der Vorteil, dass das Verfahren besonders flexibel einsetzbar ist.

Ein zweiter Aspekt der Erfindung betrifft eine Messeinrichtung, welche als Messanordnung an einer entsprechenden, das Schmelzverfahren durchführenden Fertigungseinrichtung angeordnet ist, zum Prüfen eines Bauteils, welches mittels des additiven Schmelzverfahrens schichtweise aus einem Material hergestellt wird, mit einer Wirbelstrommesseinheit, durch welche während des Fertigungsprozesses für wenigstens einen jeweils zuletzt gebildeten Bereich der jeweils aktuellen Schicht eine Leitfähigkeit erfassbar ist, und mit einer Steuereinheit, durch welche aus der Leitfähigkeit ein Leitfähigkeitswert und anhand dessen eine Bauteileigenschaft in dem Bereich ableitbar ist, wobei durch die Steuereinheit und/oder eine Sensoreinheit eine Temperatur des Bereichs bestimmbar ist, sodass die Ableitung der Bauteileigenschaft in Abhängigkeit von der bestimmten Temperatur durchführbar ist.

Dabei sind vorteilhafte Ausgestaltungen und Weiterbildungen sowie Vorteile des ersten Aspekts der Erfindung als vorteilhafte Ausgestaltungen und Weiterbildungen sowie Vorteile des zweiten Aspekts der Erfindung anzusehen und umgekehrt.

In vorteilhafter Ausgestaltung der Erfindung umfasst die Sensoreinheit ein Pyrometer, insbesondere eine Quotientenpyrometer. Zusätzlich oder alternativ umfasst die Wirbelstrommesseinheit einen GMR-Sensor und/oder einen SQUID. Mit anderen Worten erfolgt die Temperaturmessung über ein Strahlungsthermometer zur berührungslosen Messung, wobei vorteilhafterweise das Quotientenpyrometer verwendet wird, bei dem eine Intensität nicht nur in einem Wellenlängenbereich gemessen wird, sondern das Verhältnis der Intensität bei zwei unterschiedlichen Farben beziehungsweise Wellenlängenbereichen bestimmt wird. Zusätzlich oder alternativ wird für die Wirbelstrommessung ein Gerät verwendet, welches einen Riesenmagnetwiderstand bestimmen kann beziehungsweise einen entsprechenden quantenmechanischen Effekt ausnutzt beziehungsweise ein SQUID, das heißt ein supraleitendes Quanteninterferenzgerät. Dadurch ergibt sich der Vorteil, dass die jeweilige Messung besonders präzise erfolgen kann.

Unabhängig vom grammatikalischen Geschlecht eines bestimmten Begriffes sind Personen mit männlicher, weiblicher oder anderer Geschlechteridentität mit umfasst.

Weitere Vorteile, Merkmale und Einzelheiten der Erfindung ergeben sich aus der nachfolgenden Beschreibung eines bevorzugten Ausführungsbeispiels sowie anhand der Zeichnung. Die genannten Merkmale und Merkmalskombinationen sowie die in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Es zeigt:
- FIG 1: eine schematische Ansicht einer Messeinheit an einer Fertigungsanlage für das Schmelzverfahren;
- FIG 2: eine schematische Draufsicht auf ein Pulverbett bei einem Schmelzverfahren zur Herstellung eines Bauteils mit einer Temperaturverteilung;
- FIG 3: schematische Perspektivansichten während des Schmelzverfahrens gemäß FIG 1 mit unterschiedlich gebildeten Schichten des Bauteils;
- FIG 4: ein schematisches Diagramm einer Temperaturhöhenkurve anhand quasistatistischer Berechnung für das Schmelzverfahren;
- FIG 5: eine schematische Ansicht einer Aufteilung eines Teils einer Begleitprobe gemäß den FIG 1 und 2; und
- FIG 6: ein schematisches Diagramm der Temperatur über die Zeit für die Begleitprobe für unterschiedliche Berechnungsmethoden der Temperatur.

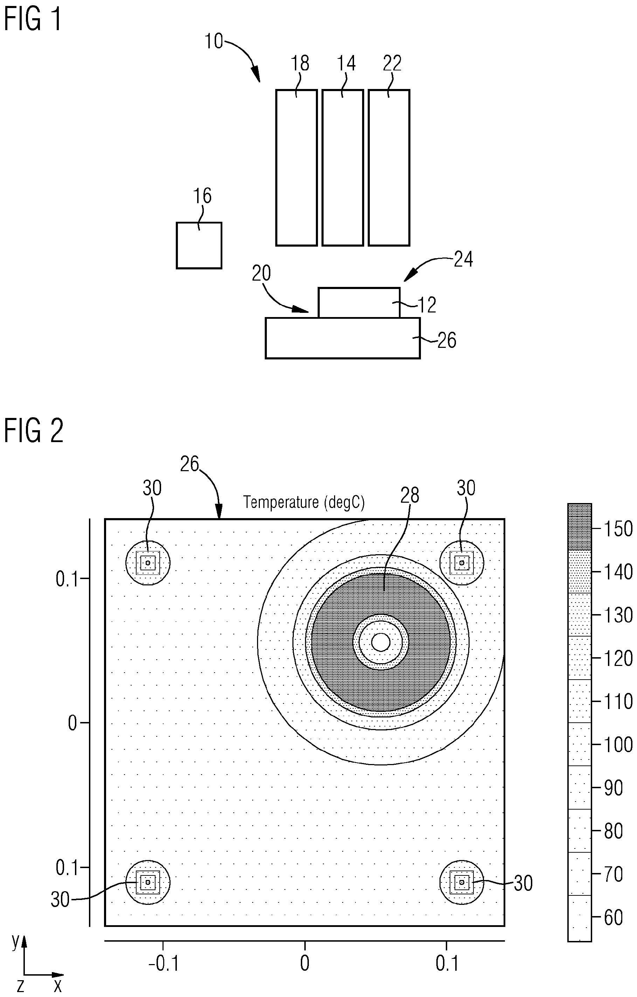

FIG 1 zeigt eine schematische Ansicht einer Messeinrichtung 10 zum Prüfen eines Bauteils 12, welches mittels einer additiven Schmelzverfahrens schichtweise, das heißt aus einzelnen Schichten, aus einem Material hergestellt wird, mit einer Wirbelstrommesseinheit 14, durch welche während des Fertigungsprozesses des Schmelzverfahrens für wenigstens einen jeweils zuletzt gebildeten Bereich der jeweils aktuellen Schicht eine Leitfähigkeit, insbesondere über Wirbelstromverluste beziehungsweise Wirbelstrommessung, erfassbar ist, und mit einer Steuereinheit 16, durch welche aus der Leitfähigkeit ein Leitfähigkeitswert und anhand dessen eine Bauteileigenschaft in dem Bereich ableitbar ist. Dabei kann durch die Steuereinheit 16 und/oder eine Sensoreinheit 18 eine Temperatur des Bereichs bestimmt werden, sodass die Ableitung der Bauteileigenschaft in Abhängigkeit von der bestimmten Temperatur durchführbar ist.

In dem gezeigten Ausführungsbeispiel ist das Schmelzverfahren ein selektives Laserschmelzen in einem Pulverbett 20. Dabei kann das Verfahren für quasi beliebige Schmelzverfahren angewendet werden.

Die Messeinrichtung 10 beziehungsweise insbesondere die Wirbelstrommesseinheit 14 ist insbesondere mit einer Montageeinheit 22 einer Fertigungsanlage 24, durch welche das Schmelzverfahren durchgeführt wird, während des Fertigungsprozesses mitgeführt. Die Sensoreinheit 18 kann zum Bestimmen der Temperatur insbesondere ein Pyrometer, welches vorteilhafterweise als Quotientenpyrometer ausgebildet ist, umfassen. Die Wirbelstrommesseinheit 14 umfasst vorteilhafterweise einen GMR-Sensor und/oder einen SQUID.

Mittels der Messeinrichtung 10 kann ein Verfahren zum insbesondere in-situ-Prüfen des Bauteils 12 durchgeführt werden, wobei das Bauteil 12 mittels des additiven Schmelzverfahrens schichtweise aus einem Material hergestellt wird, und während des Fertigungsprozesses wenigstens ein zuletzt gebildeter Bereich der jeweils aktuellen Schicht mittels der Messeinrichtung 10 eine Leitfähigkeit erfasst und daraus ein Leitfähigkeitswert bestimmt wird, anhand dessen eine Bauteileigenschaft, bei der es sich insbesondere um eine Porosität und/oder Fehlstellen handelt, in den wenigstens einen Bereich abgeleitet wird.

Dabei wird eine Temperatur des Bereichs bestimmt, beispielsweise durch Messen, insbesondere mittels der Sensoreinheit 18 und/oder durch eine Simulation, welche insbesondere durch die Steuereinheit 16 durchgeführt oder beispielsweise von einer zentralen elektronischen Recheneinrichtung abgerufen wird. Die Ableitung der Bauteileigenschaft erfolgt in Abhängigkeit von der bestimmten Temperatur.

Für die Berechnung beziehungsweise Bestimmung der Temperatur anhand eines Modells können im Wesentlichen zwei, im Folgenden vorgestellte Berechnungsverfahren verwendet werden: Ein quasi-statistische Modell und ein Modell mittels einer homogenisierten dynamischen Berechnung.

Bei einem quasi-statistische Modell beziehungsweise der quasi-statistischen Berechnung wird eine numerische Näherungsmethode angewandt. Dabei wird vereinfacht davon ausgegangen, dass für die Temperaturberechnung zulässig ist, die von einer Metalloberfläche beziehungsweise dem Material des Bauteils 12 absorbierte Laserstrahlung homogen auf die bestrahlte Fläche zu verteilen. Dabei erfolgt eine Korrektur für die Laserauszeiten, und das thermisch Problem wird in unterschiedlichen Stadien des Baus, unter der Berücksichtigung eines homogenen Wärmeeintrags von oben, sowie dem Abströmen von Wärme durch Leitung sowie durch Konvektion und Strahlung in der Baukammer.

So zeigt FIG 2 in einer Draufsicht eine Bauplatte 26, bei der eine Nutzlast beziehungsweise das Bauteil 12 in Form eines Zylinders 28 und vier rechteckigen Begleitproben 30 aufgebaut werden soll beziehungsweise wird.

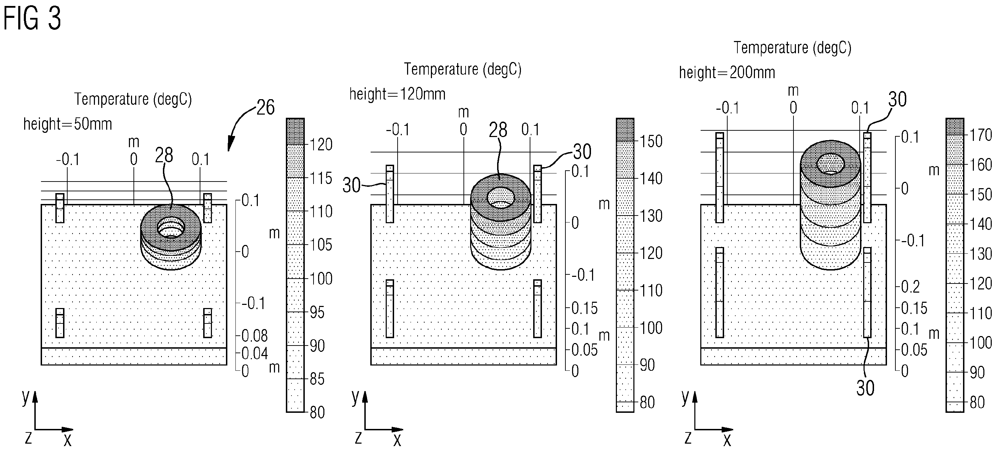

FIG 3 zeigt die Abfolge des Baus mittels des Schmelzverfahrens gemäß FIG 2 für den Zylinder 28 und die Begleitproben 30 für drei unterschiedliche Höhen, das heißt für unterschiedliche Schichten, wobei jeweils schraffiert eine unterschiedliche Temperaturverteilung gezeigt ist, sodass zu sehen ist, dass aufgrund der unsymmetrischen Position der Nutzlast beziehungsweise des Zylinders 28 auf dem Pulverbett 20 die Begleitproben 30 jeweils voneinander unterschiedliche Temperaturen aufweisen können.

Die Temperaturen, welche n FIG 2 und FIG3 gezeigt sind, wurden mittels eines quasi-statistische Modells berechnet.

Vorteilhafterweise müssen Berechnungen, wie in FIG 2 und 3 gezeigt, für unterschiedlichen Bauplattenkonfigurationen durchgeführt werden, und zwar für eine Anzahl von Bauhöhen (= innerhalb des Bauprozesses beziehungsweise Fertigungsprozesses). Dabei bedeutet eine Bauplattenkonfiguration, dass das Bauteil 12 beziehungsweise der Zylinder 28 an unterschiedlichen Positionen auf der Bauplatte 26 beziehungsweise dem Pulverbett 20 positioniert wird.

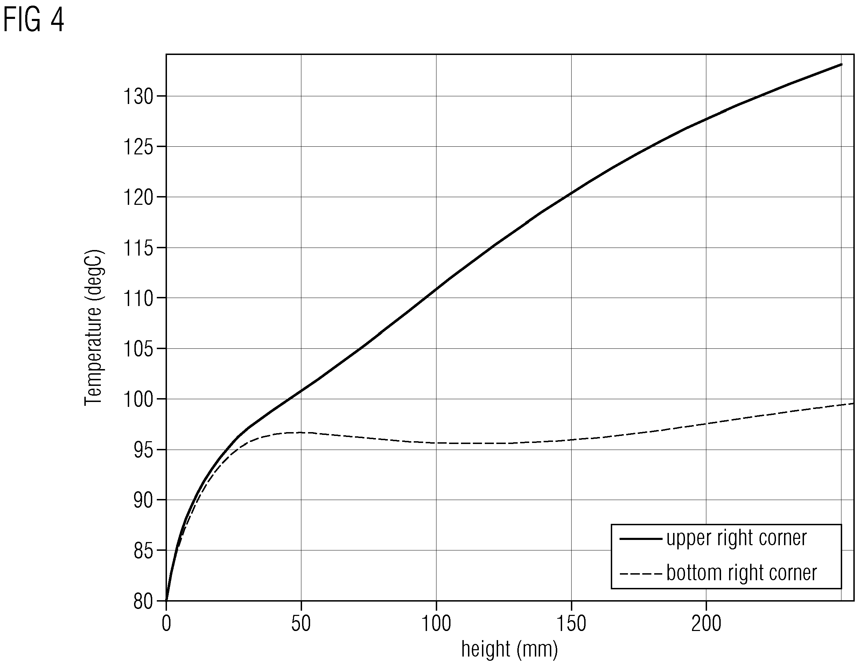

FIG 4 zeigt in einem Diagramm ein Ergebnis der erwarteten quasi-statistischen Temperatur für die beiden in FIG 2 und 3 rechts angeordneten Begleitproben 30 in Abhängigkeit von der Bauhöhe beziehungsweise somit der Anzahl der aufgetragenen Schichten. Dabei zeigt sich, dass aufgrund der Nähe des Zylinders 28 und dessen Temperatur, welche beispielsweise auch zumindest teilweise das Pulver übertragen werden kann, sich unterschiedliche Höhentemperaturverläufe in unterschiedlichen Begleitproben 30 ergeben.

So könnte mit Hilfe einer berechneten Kurve analog zur Abbildung 4 beispielsweise mittels Tabellenwerten und/oder über durchgeführte Kalibrationsmessungen, bei welchen eine Bestimmung der elektrischen Leitfähigkeit aufgrund der Temperatur erfolgt, für entsprechende Legierungen ein höhenspezifischer Erwartungswert für fehlerfreies Material (beispielsweise ohne Poren) bestimmt wird, mit dem man den aktuellen Messwert vergleichen kann.

Bei der homogenisierten dynamischen Berechnung ist eine weitere Möglichkeit für eine berechnungsbasierte Temperaturkompensation gegeben, welche gegenüber der quasi-statistischen Berechnungsmethode einen höheren Rechenaufwand hat, sodass die Steuereinheit 16 entsprechend ausgelegt werden sollte, dafür aber gegenüber der quasi-statistischen Berechnung eine höhere Genauigkeit ermöglicht.

Die dynamische Berechnung kann die quasi-statistische Berechnung als Ausgangspunkt beziehungsweise Startlösung verwenden. Von dieser Startlösung ausgehend wird die Modellierung des Aufbaus in einer Schicht im Pulverbettprozess (beziehungsweise L-PBF-Prozess) in mindestens zwei, bevorzugt mindestens zwei, bevorzugt mehr Phasen unterteilt.

Eine Unterteilung in zwei Phasen kann dann sinnvoll sein, wenn nur eine Komponente beziehungsweise ein Bauteil im Prozess aufgebaut wird (vergleiche hier mehrere Begleitproben 30 und Zylinder 28). Bei nur einem Bauteil 12 kann die Unterteilung in zwei Phasen derart geschehen, dass die Zeit für die Belichtung und Beschichtung des Bauteils 12 aufgeteilt wird, sodass die erste Phase der Belichtungszeit des Bauteils 12 entspricht und die zweite Phase der Beschichtung des Pulverbetts 20.

Eine Laserleistung des Lasers beim selektiven Laserschmelzen, welches der entsprechende Fertigungsprozess ist, wird dabei sowie seine Sprungzeiten korrigiert, nicht jedoch die Belichtungszeit. So wird in Phase 1 als Lichtquelle die Oberfläche der Komponente zugeordnet beziehungsweise des Bauteils 12, während in der zweiten Phase (Beschichtung) der Laser ausgeschaltet ist, und somit die Quelle zu null gesetzt wird. Dieses Modell liefert gegenüber der quasi-statistischen Berechnung eine höhere bestimmte Temperatur bei der Belichtung, während die bestimmte Temperatur in der Beschichtungszeit niedriger ist.

Betrachtet man die Konfiguration der FIG 2 und 3, so kann es für diese Konfiguration sinnvoll sein, jede Schicht analog in sechs Phasen zu unterteilen:
Die Belichtung der zylindrischen Nutzlastkomponente beziehungsweise des Zylinders 28 sowie der vier Begleitproben 30 stellen jeweils eine Phase dar. Die abschließende Beschichtung mit Pulver stellt eine weitere, fünfte Phase dar.

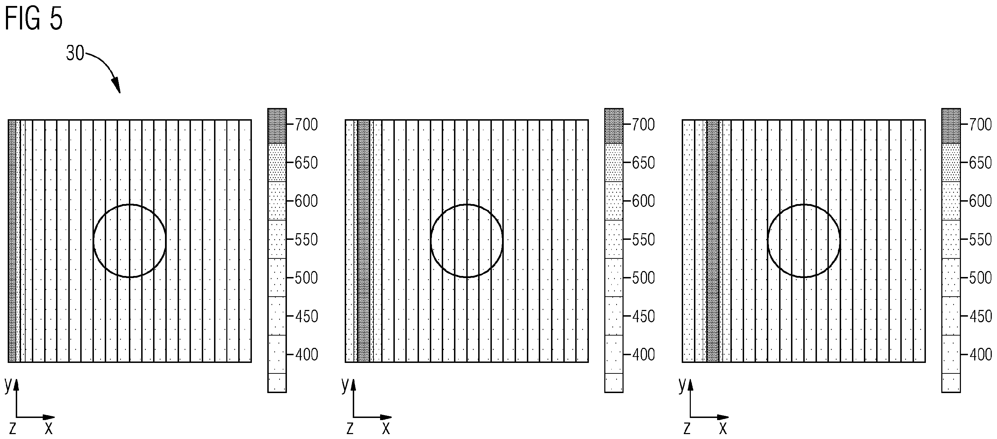

Jede der fünf Komponenten, also Zylinder 28 und Begleitproben 30, wird in der eigenen Belichtungsphase mit Wärmeenergie versorgt, während sie in den anderen fünf Phasen abkühlen kann. Es ist auch möglich, dem lokalen Verhalten der Belichtung dadurch Rechnung zu tragen, dass man auch die Belichtung einzelner Komponenten (Zylinder 28, Begleitproben 30) in kürzere Phasen unterteilt. So kann beispielsweise das Fortschreiten der Wärmefront von links nach rechts berücksichtigt werden. Ein entsprechendes Beispiel beziehungsweise Ergebnis der zugehörigen Berechnung ist in FIG 5 für die rechte, obere der Begleitproben 30 dargestellt, wobei für das Modell, diese in zwanzig Streifen, welche nacheinander jeweils von einer homogenierten Wärmequelle beheizt werden, unterteilt wird. Dabei ist durch die Schraffur die Wärme dargestellt, wie sie in der Zeichenebene links nach rechts wandert.

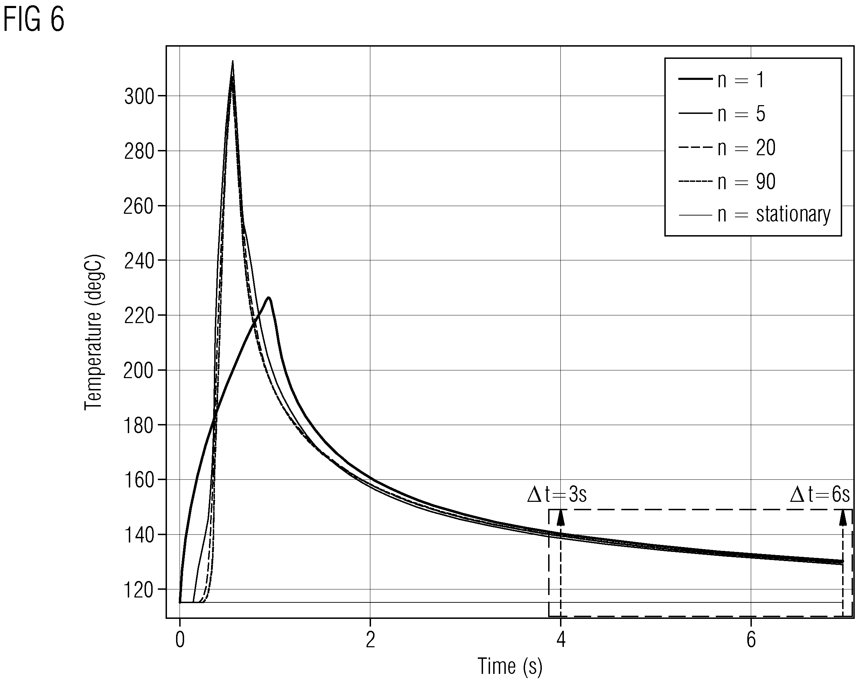

So zeigt das Diagramm der FIG 6 ein entsprechendes Ergebnis der Berechnung mit unterschiedlichen Aufteilungen der Begleitprobe 30. Dabei stellt n = 1 den Fall dar, dass die Begleitprobe 30 als Ganzes belichtet wird, während n = 20 bedeutet, dass die Aufteilung der Belichtungen wie in FIG 5 gezeigt durchgenommen wurde. Dabei wurde jeweils die mittlere Temperatur in dem Kreis, der in FIG 5 gezeigt ist, der entsprechenden Begleitprobe 30 berechnet.

Es ist der FIG 6 deutlich zu entnehmen, dass sich die Temperatur während der Belichtung erhöht und nach der Belichtung in der Beschichtungszeit wieder absinkt. Wichtig ist der in FIG 6 markierte Bereich beziehungsweise Zeitfenster zwischen der dritten und sechsten Sekunde nach Ende der Belichtung. Da dieser Zeitbereich der Zeit entspricht, bei der die Messung mittels der Wirbelstrommesseinheit 14 erfolgt. Dabei zeigt sich, dass es keinen wesentlichen Unterschied für die Temperatur in dem Zeitfenster zwischen 3 und 6 Sekunden gibt und eine am wenigstens aufwendige Unterteilung der Begleitprobe 30 mit n = 1 und der aufwendigsten Unterteilung n = 90 gibt, wobei sich beide deutlich von der quasi-stationären Verteilung unterscheiden, welcher insgesamt nur eine Temperatur für das Bauteil 12 beziehungsweise die Begleitprobe 30 von 120° liefert.

So zeigt FIG 6 zusammengefasst die Auswirkung unterschiedlicher Unterteilungen der Begleitprobe 30. Die relevante Zeit für die Wirbelstrommessung liegt in dem Intervall zwischen 3 und 6 Sekunden, die verschiedenen Unterteilungen der Begleitprobe 30 unterscheiden sich nicht wesentlich in dem Bereich, wobei daher der Fall n = 1 zu bevorzugen ist. Daher ist es von Vorteil, in dieser Konfiguration die Unterteilung n = 1 zu wählen, welche eine Homogenisierung der Laserquelle über die ganze Fläche der Begleitprobe 30 in dem beschreibt und in dem Zeitfenster gegenüber n>1 ein gutes Ergebnis liefert, sodass eine weitere Unterteilung nur unnötig Rechenkraft verschwenden würde.

Durch die hier vorgestellte Messeinrichtung 10 und das entsprechende Verfahren ergibt sich der wesentliche Unterschied zum Stand der Technik mittels einer thermischen Kompensation für Wirbelstrommessungen, die sich auf die Temperatur des aufzubauenden Werkstücks beziehungsweise Bauteils 12 und/oder von Materialbegleitproben bezieht, im Stand der Technik nicht vorhanden ist.

Ohne eine thermische Kompensation ist die Erkennung von Prozessdefekten beziehungsweise der Bauteilqualität, wie beispielsweise Poren, mittels Wirbelstrommessungen nicht realistisch, da die Auswirkungen der Temperaturerhöhung auf ein gemessenes Signal wesentlich größer sind als die durch Prozessdefekte zu detektierenden Abweichungen, sodass die Abweichungen durch Prozessdefekte in den thermischen Abweichungen untergehen würden. Es konnte eine vorteilhafte Methode zur thermischen Kompensation einer in-line Wirbelstrommessung in einem additiven Fertigungsprozess gezeigt werden.

### Bezugszeichenliste

- 10: Messeinrichtung
- 12: Bauteil
- 14: Wirbelstrommesseinheit
- 16: Steuereinheit
- 18: Sensoreinheit
- 20: Pulverbett
- 22: Montageeinheit
- 24: Fertigungsanlage
- 26: Bauplatte
- 28: Zylinder
- 30: Begleitprobe

## Patentansprüche

1. Verfahren zum Prüfen eines Bauteils (12), welches mittels einem additiven Schmelzverfahren schichtweise aus einem Material hergestellt wird, bei dem während eines Fertigungsprozesses wenigstens ein zuletzt gebildeter Bereich der jeweils aktuellen Schicht mittels einer Wirbelstrommesseinheit (14) einer Messeinrichtung (10) eine Leitfähigkeit erfasst und daraus ein Leitfähigkeitswert bestimmt wird, anhand dessen eine Bauteileigenschaft in dem wenigstens einen Bereich abgleitet wird, wobei
eine Temperatur des wenigstens einen Bereichs bestimmt wird und die Ableitung der Bauteileigenschaft in Abhängigkeit von der bestimmten Temperatur erfolgt.

2. Verfahren nach Anspruch 1, **dadurch gekennzeichnet, dass**
die Wirbelstrommesseinheit (14) mit einer Montageeinheit (22) mitgeführt wird.

3. Verfahren nach Anspruch 1 oder 2, **dadurch gekennzeichnet, dass**
als die Bauteileigenschaft eine Porosität und/oder Fehlstellen ermittelt werden.

4. Verfahren nach einem der vorhergehende Ansprüche, **dadurch gekennzeichnet, dass**
die Temperatur des Bereichs mittels einer Sensoreinheit (18) erfasst wird und/oder die Temperatur anhand eine Modells des Bauteils (12) und/oder des Fertigungsprozesses ermittelt wird.

5. Verfahren nach Anspruch 4, **dadurch gekennzeichnet, dass**
das Modells mittels einer quasi-statistischen Berechnung bestimmt wird.

6. Verfahren nach Anspruch 4 oder 5, **dadurch gekennzeichnet, dass**
das Modells mittels einer homogenisierten dynamischen Berechnung bestimmt wird.

7. Verfahren nach Anspruch 6, **dadurch gekennzeichnet, dass**
für die Berechnung wenigstens eine Phase bestimmt wird, die einen Teil des Bereichs und/oder eine Teil eines Schritts des Fertigungsprozess beschreibt.

8. Verfahren nach einem der vorhergehende Ansprüche, **dadurch gekennzeichnet, dass**
das Schmelzverfahren Selektives Laserschmelzen, Selektives Elektronenstrahl-Schmelzen, Laserauftragsschweißen, Wire-Arc- und/oder Plasma-Arc-Energy-Deposition, Wire-Feed-Electron-Deposition und/oder Metal-Binder-Jetting ist.-

9. Messeinrichtung (10) zum Prüfen eines Bauteils (12), welches mittels einem additiven Schmelzverfahren schichtweise aus einem Material hergestellt wird, mit einer Wirbelstrommesseinheit (14), durch welche während eines Fertigungsprozesses für wenigstens einen jeweils zuletzt gebildeten Bereich der jeweils aktuellen Schicht eine Leitfähigkeit erfassbar ist, und mit einer Steuereinheit (16), durch welche aus der Leitfähigkeit ein Leitfähigkeitswert und anhand dessen eine Bauteileigenschaft in dem Bereich ableitbar ist, wobei
durch die Steuereinheit (16) und/oder eine Sensoreinheit (18) eine Temperatur des Bereichs bestimmbar ist, sodass die Ableitung der Bauteileigenschaft in Abhängigkeit von der bestimmten Temperatur durchführbar ist.

10. Messeinrichtung (10) nach Anspruch 9, **dadurch gekennzeichnet, dass** die Sensoreinheit (18) ein Pyrometer, insbesondere eine Quotientenpyrometer, umfasst und/oder die Wirbelstrommesseinheit (14) einen GMR-Sensor und/oder einen SQUID umfasst.
